# EUROPÄISCHE PATENTANMELDUNG

(11) **EP 2 119 951 A2**
(43) Veröffentlichungstag der Anmeldung: **18.11.2009**
(21) Anmeldenummer: 09005883.5
(22) Anmeldetag: 28.04.2009
(51) Int. Cl.: F16N 7/16

(54) **Schmiermittelversorgungsvorrichtung**

(30) Priorität: 15.05.2008 DE 102008023674
(71) Anmelder: AB SKF, 415 50 Göteborg (SE)
(72) Erfinder: Kreutzkämper, Jürgen, 74915 Waibstadt (DE); Inanloo, Ali-Akbar, 68167 Mannheim (DE); Sattelberger, Paul, 68799 Reilingen (DE)
(74) Vertreter: Schonecke, Mitja

(57) **Zusammenfassung**

Die Erfindung betrifft eine Schmiermittelversorgungsvorrichtung (1), die einen Aufnahmebehälter (2) für Schmiermittel aufweist, in dessen Bodenbereich sich ein von einem Motor (3) angetriebenes Förderelement (4) für Schmiermittel befindet, wobei das Förderelement (4) das Schmiermittel zu einer Pumpe (5) fördert, die das Schmiermittel unter erhöhtem Druck in eine Schmiermittelleitung (6) fördert. Um nur einen Motor für das Fördern und das Unter-Druck-Setzen des Schmiermittels zu benötigen und dabei eine kompakte Bauart zu ermöglichen, sieht die Erfindung vor, dass das Förderelement (4) eine von dem Motor (3) angetriebene Welle (7) umfasst, um die herum sich Fördermittel (8) erstrecken, wobei das eine axiale Ende der Welle (7) mit einem Wellenteil (9) der Pumpe (5) drehfest verbunden ist, so dass der Motor (3) sowohl das Förderelement (3) als auch die Pumpe (5) antreiben kann.

## Beschreibung

Die Erfindung betrifft eine Schmiermittelversorgungsvorrichtung, die einen Aufnahmebehälter für Schmiermittel aufweist, in dessen Bodenbereich sich ein von einem Motor angetriebenes Förderelement für Schmiermittel befindet, wobei das Förderelement das Schmiermittel zu einer Pumpe fördert, die das Schmiermittel unter erhöhtem Druck in eine Schmiermittelleitung fördert.

Eine Vorrichtung dieser Art ist beispielsweise aus der EP 0 009 908 B1 bekannt. Dort wird eine Einrichtung zum Pumpen eines Schmiermittels beschrieben, bei der aus einem Behälter mittels einer Förderschnecke das zu fördernde Medium in den Bereich einer Pumpe verbracht wird, die es dann auf einen gewünschten Druck bringt. Dabei weisen die Förderschnecke und die Pumpe jeweils separate Antriebe auf.

Aus der EP 0 642 913 A1, aus der EP 1 352 729 A1, aus der US 4 642 040 und aus der DE 103 48 985 B3 ist es zwar bekannt, zum Fördern auf der einen Seite und zum Druckaufbau auf der anderen Seite einen einzigen Antrieb einzusetzen. Allerdings zeichnen sich die dort offenbarten Vorrichtungen durch eine sehr ausladende Bauweise aus bzw. es werden relativ kompliziert aufgebaute Getriebezüge benötigt, um mit nur einem Antrieb zu fördern und ein Medium unter Druck zu setzen. Beim Einsatz von Zahnradpumpen bzw. von planetengetriebeartigen Pumpen ergeben sich nachteilig relativ große radiale Ausdehnungen der Vorrichtung, die einen entsprechenden Bauraum erfordern.

Der Erfindung liegt daher die **Aufgabe** zu Grunde, eine Vorrichtung der eingangs genannten Art so fortzubilden, dass mit nur einem einzigen Antrieb das Fördern des Schmiermittels und das Unter-Druck-Setzen desselben erfolgen kann, wobei eine einfache Konstruktion mit einem kompakten Aufbau ermöglicht wird. Eine weitere wesentliche Zielsetzung ist, dass eine modulartige Bauweise der Vorrichtung erreicht werden soll, die es insbesondere ermöglicht, eine einfache Montage und Wartung mit problemlosem Austausch von Komponenten vornehmen zu können.

Die **Lösung** dieser Aufgabe durch die Erfindung ist **dadurch gekennzeichnet, dass** das Förderelement eine von dem Motor angetriebene Welle umfasst, um die herum sich Fördermittel erstrecken, wobei das eine axiale Ende der Welle mit einem Wellenteil der Pumpe drehfest verbunden ist, so dass der Motor sowohl das Förderelement als auch die Pumpe antreiben kann.

Dabei ist bevorzugt vorgesehen, dass das Förderelement als Förderschnecke ausgebildet ist, bei dem sich um die Welle herum ein Fördermittel in Form mindestens eines Schneckenganges erstreckt. Die Welle kann sich dabei über die axiale Ausdehnung des mindestens einen Schneckenganges hinaus erstrecken.

Die Welle und das Wellenteil der Pumpe sind besonders bevorzugt koaxial zueinander angeordnet und über eine formschlüssige Verbindung drehfest miteinander verbunden. In diesem Falle ist es vorteilhaft, wenn die formschlüssige Verbindung die einzige Verbindung zwischen der Welle und dem Wellenteil der Pumpe ist.

Die Pumpe ist vorzugsweise als Radialkolbenpumpe mit mindestens einer Radialkolbeneinheit ausgebildet. Es können auch mehrere Radialkolbeneinheiten um den Umfang des Wellenteils der Pumpe angeordnet werden. Besonders bevorzugt sind zwischen 2 und 10 Radialkolbeneinheiten um den Umfang des Wellenteils der Pumpe äquidistant angeordnet. Alle Radialkolbeneinheiten können von einem Exzenter angetrieben werden, der drehfest mit dem Wellenteil der Pumpe verbunden ist. Weiterhin kann vorgesehen sein, dass alle Radialkolbeneinheiten mit einem Federelement so vorgespannt sind, dass sie ohne äußere Krafteinwirkung eine definierte Lage einnehmen. Es kann alternativ aber auch eine Zwangsführung der Kolben vorgesehen werden.

Der Motor kann elektrisch, hydraulisch oder pneumatisch angetrieben sein.

Die Schmiermittelleitung umfasst bevorzugt eine Ringleitung, die von allen Radialkolbeneinheiten mit unter Druck stehendem Schmiermittel versorgt wird. Zwischen einer Radialkolbeneinheit und der Ringleitung kann ein Rückschlagventil angeordnet sein. Die Ringleitung kann mit einem Überdruckventil verbunden sein. Die Ringleitung ist gemäß einer bevorzugten Ausgestaltung der Erfindung mit mindestens einem Wegeventil verbunden.

Mit der vorgeschlagenen Vorrichtung wird es möglich, die Verbindung zwischen Förderschnecke und Pumpe schnell und einfach herzustellen und auch wieder zu lösen, wenn Komponenten der Vorrichtung gewartet bzw. ausgetauscht werden sollen. Damit wird eine modulare Bauweise begünstigt.

Ferner wird eine insgesamt platzsparende und radial nicht ausladende Bauart erzielt, die platzsparend und einfach aufgebaut ist, so dass auch die Herstellkosten der Vorrichtung gering sind.

In der Zeichnung sind Ausführungsbeispiele der Erfindung dargestellt. Es zeigen:
- Fig. 1: schematisch die Seitenansicht einer Schmiermittelversorgungsvorrich- tung,
- Fig. 2: die teilweise geschnitten dargestellte Seitenansicht der Pumpe der Vor- richtung gemäß Fig. 1,
- Fig. 3: die zu Fig. 2 zugehörige Vorderansicht der Pumpe,
- Fig. 4: schematisch den Leitungsplan eines Zweileitungszentralschmiersystems mit zwei Umsteuerventilen, durch das das von der Vorrichtung gemäß Fig. 1 geförderte Schmiermittel verteilt wird,
- Fig. 5: das System nach Fig. 4 in einer vorrichtungstechnischen Umsetzung,
- Fig. 6: schematisch den Leitungsplan eines Zweileitungszentralschmiersystems ohne Umsteuerventile, durch das das von der Vorrichtung gemäß Fig. 1 geförderte Schmiermittel verteilt wird,
- Fig. 7: das System nach Fig. 6 in einer vorrichtungstechnischen Umsetzung,
- Fig. 8: schematisch den Leitungsplan eines Einleitungszentralschmiersystems mit einem Umsteuerventil, durch das das von der Vorrichtung gemäß Fig. 1 geförderte Schmiermittel verteilt wird,
- Fig. 9: das System nach Fig. 8 in einer vorrichtungstechnischen Umsetzung,
- Fig. 10: schematisch den Leitungsplan eines Zentralschmiersystems ohne Um- steuerventile, durch das das von der Vorrichtung gemäß Fig. 1 geförderte Schmiermittel verteilt wird und
- Fig. 11: das System nach Fig. 10 in einer vorrichtungstechnischen Umsetzung.

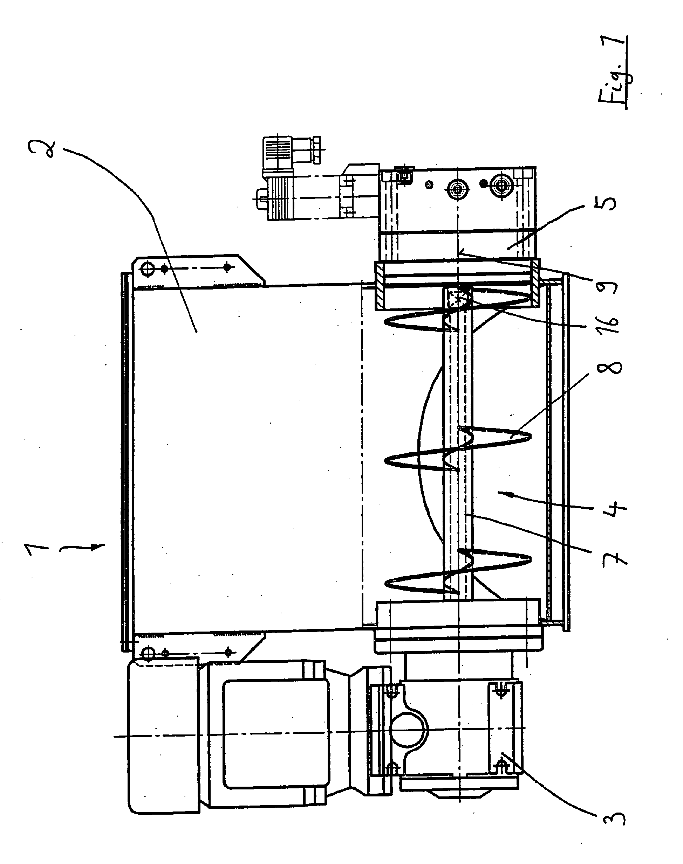

In Fig. 1 ist eine Schmiermittelversorgungsvorrichtung 1 zu sehen, mit der Fett oder Öl als Schmiermittel gefördert werden kann. Die Vorrichtung 1 zeichnet sich durch einen modularen Aufbau aus und kann für verschiedene Schmiersysteme ausgelegt werden, insbesondere für ein Zweileitungszentralschmiersystem, für ein Einleitungszentralschmiersystem oder für ein Progressivschmiersystem.

Die Vorrichtung 1 hat einen Aufnahmebehälter 2 für Schmiermittel (Öl oder Fett) und ist bevorzugt zylindrisch ausgeführt; möglich ist aber auch eine eckige Grundform. Ein Motor 3 treibt die Welle 7 eines Förderelements 4 in Form einer Förderschnecke an. Ein Schneckengang 8, der als Fördermittel fungiert, erstreckt sich wendelförmig in bekannter Weise um die Welle 7 herum und fördert bei der Rotation der Welle 7 Schmiermittel. Am einen (rechten) axialen Ende der Welle 7 ist eine Pumpe 5 in Form einer Radialkolbenpumpe angeordnet. Die Pumpe 5 weist ein Wellenteil 9 auf, das mit der Welle 7 drehfest gekoppelt ist.

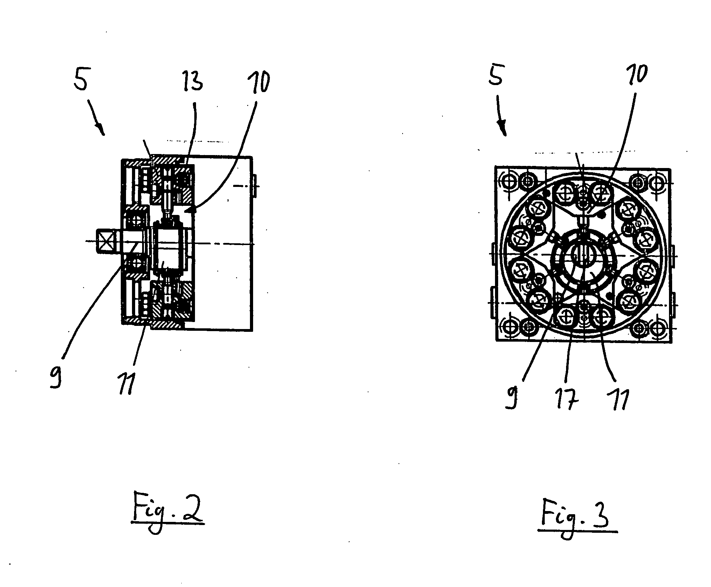

Dabei ist die drehfeste Verbindung 16 (s. Fig. 1) so ausgeführt, dass das Drehmoment von der Welle 7 auf das Wellenteil 9 ausschließlich durch eine formschlüssige Kopplung übertragen wird. In Fig. 3 ist hierzu zu sehen, dass es sich bei der formschlüssigen Verbindung 16 um eine sich radial erstreckende Nut 17 (z. B. im Wellenteil 9) handeln kann, in die ein kongruent geformter Vorsprung (z. B. in der Welle) eingreift. Es ist also insbesondere keine weitere Verbindung zwischen den Teilen 7 und 9 vorgesehen; die Verbindung 16 arbeitet alleine auf formschlüssiger Basis.

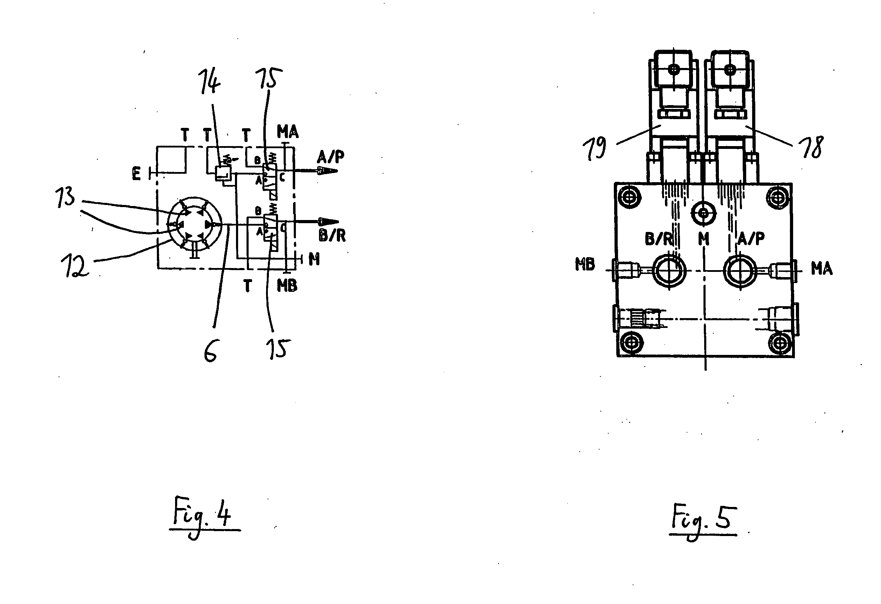

Wie aus den Figuren 2 und 3 hervorgeht, ist die Pumpe 5 als Radialkolbenpumpe ausgeführt, d. h. es sind mehrere Radialkolbeneinheiten 10 äquidistant um den Umfang des Wellenteil 9 der Pumpe 5 herum angeordnet, die von einem Exzenter 11 betätigt werden, der mit dem Wellenteil 9 der Pumpe 5 drehfest verbunden ist. D. h. die Pumpe 5 ist mit mehreren Pumpenelementen in Form der Radialkolbeneinheiten 10 bestückt, wobei die Kolbenhubbewegung durch den rotierenden Exzenter 11 veranlasst wird. Die Kolbenrückführung (Saugphase) kann durch Druckfedern oder zwangsgeführt erfolgen. Jede Radialkolbeneinheit fördert das Medium über ein Rückschlagventil 13 in eine Ringleitung 12 (s. Figuren 4 bis 10).

Aus den Figuren 4 und 5, 6 und 7, 8 und 9 und 10 und 11 gehen jeweils vier verschiedene Ausführungsformen einer Schmiermittelleitung 6 hervor, die sich an die Pumpe 5 anschließt und zur Versorgung eines Verbrauchers für Schmiermittel dient.

Eine Absicherung der Schmiermittelleitung 6 gegen Überdruck erfolgt durch ein Überdruckventil 14.

Gemäß Fig. 4 wird aus der Ringleitung 12 je eine Druckleitung zu 3/2-Wege-Ventilanschlüssen eines Wegeventils 15 geführt (Anschluss "A" in Fig. 4/5). Die Ventilanschlüsse "B" in Fig. 4/5 führen zu einem Behälter (T). Ventilanschlüsse "C" führen zu einem Pumpenausgang A/P bzw. B/P. Weitere Pumpenanschlüsse sind die Manometeranschlüsse MA und MB und ein Messanschluss M bzw. eine Entlüftung.

In Fig. 4/5 ist ein Zweileitungszentralschmiersystem mit zwei Umsteuerventilen in Form zweier 3/2-Wegenventilen vorgesehen. Wird das Ventil 18 geschaltet, erfolgt die Förderung bei Ausgang A/P. Ist Ventil 19 nicht geschaltet, verbindet der Ausgang B/R mit dem Behälter T (drucklos). Wird das Ventil 19 geschaltet, erfolgt die Förderung bei Ausgang B/R. Ist das Ventil 18 nicht geschaltet, verbindet der Ausgang A/P mit dem Behälter T (drucklos). Die Ventile müssen für diese Anwendung wechselseitig geschaltet werden (Förderung bei A/P führt zu B/R drucklos in Behälter; Förderung bei B/R führt zu A/P drucklos in Behälter).

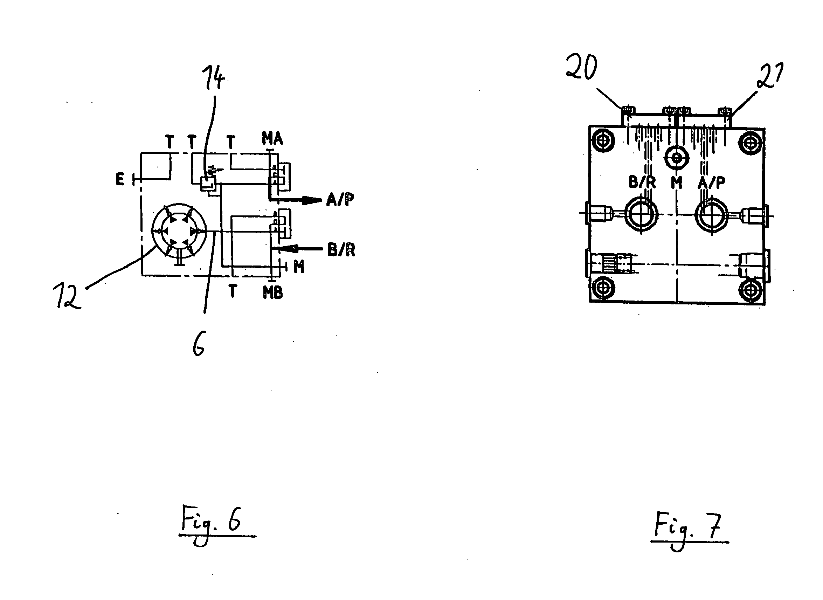

In Fig. 6/7 ist ein Zweileitungszentralschmiersystem ohne angebaute 3/2-Wegenventile dargestellt. Anstelle von zwei Ventilen werden hier zwei Umlenkplatten 20 und 21 vorgesehen. Ein Zweileitungsumsteuerventil muss separat nach der Pumpe 5 in die zwei Hauptleitungen eingebaut werden. Der Anschluss A/P ist der Druckanschluss für das Fördermedium, der Anschluss B/R ist der Behälteranschluss für die Druckentlastung.

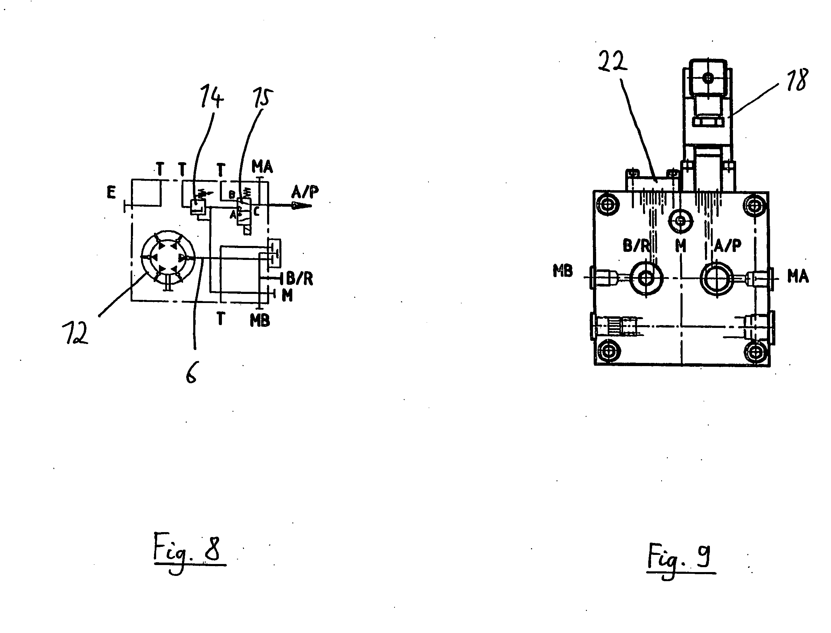

In Fig. 8/9 ist ein Einleitungszentralschmiersystem mit einem angebauten 3/2-Wegeventil dargestellt. Wird das Ventil 18 geschaltet, erfolgt die Förderung bei Ausgang A/P. Bei nicht geschaltetem Ventil 18 ist Ausgang A/P mit dem Behälter T (drucklos) verbunden. Die Ventilanschlüsse des Ventils 19 aus Fig. 5 sind bei der Lösung gemäß Fig. 9 mit einer Verschlussplatte 22 verschlossen. Der Ausgang B/R ist verschlossen.

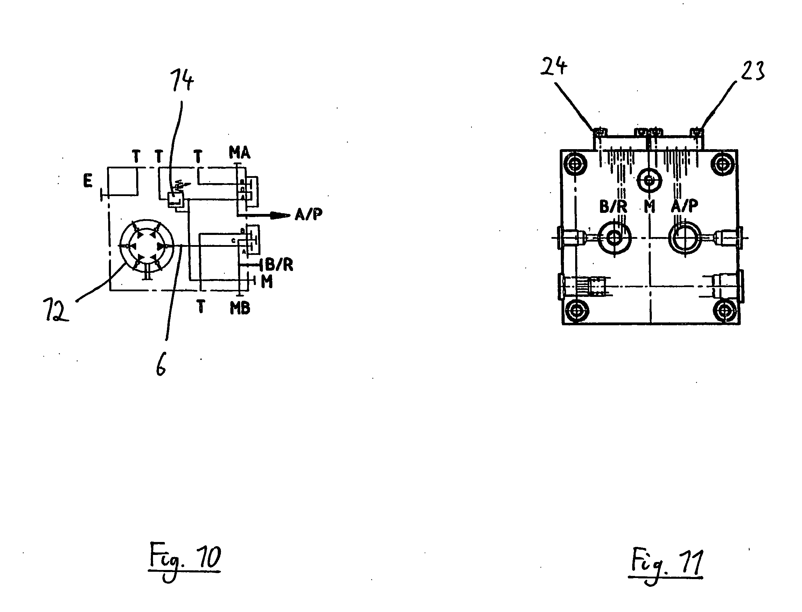

In Fig. 10/11 ist ein Zentralschmiersystem ohne angebaute 3/2-Wegeventile vorgesehen. Am Anschluss für das Ventil 18 gemäß Fig. 5 ist bei der Lösung gemäß Fig. 11 eine Umlenkplatte 23 und am Anschluss für das Ventil 19 gemäß Fig. 5 eine Verschlussplatte 24 vorgesehen. Die gesamte Förderung erfolgt an Ausgang A/P. Der Anschluss B/R ist verschlossen.

Der Motor 3 ist ein Getriebemotor mit insbesondere elektrischem, hydraulischem oder pneumatischem Antrieb. Die Förderschnecke 4 fördert durch die Drehung des Motors 3 Medium zur Pumpe 5 und treibt diese gleichzeitig an.

Der Aufnahmebehälter 2 wird bevorzugt in Behältergrößen für die Aufnahme von 15, 30 oder 60 kg Schmiermittel ausgelegt.

Der Erfindungsvorschlag zeichnet sich dadurch aus, dass die Anordnung von Motor, Förderschnecke und Pumpe modular aufgebaut ist. Diese Elemente sind bevorzugt nur formschlüssig gekoppelt, d. h. sie sind zusammengesteckt und nicht kraftschlüssig miteinander verbunden. Das erlaubt eine einfache Demontage bzw. einen einfachen Austausch von Pumpe und Motor ohne Demontage der jeweils anderen Komponenten. Durch diese modulare Bauweise kann sehr einfach nachträglich Pumpe oder Motor/Getriebe ausgetauscht werden, um andere Leistungsbereiche zu erreichen.

Durch die Wahl der Anzahl der Radialkolbeneinheiten 10 - vorzugsweise werden zwischen 1 und 6 Einheiten gewählt - kann eine gewünschte Förderleistung verwirklicht werden.

Die Pumpe 5 kann - wie oben ausgeführt - durch unterschiedliche Bestückung (1 Mal 3/2-Wege-Ventil bzw. 2 Mal 3/2-Wege-Ventil oder kein 3/2-wege-Ventil) die Ausgangsleitungen mit Druck beaufschlagen oder als Rücklaufleitung dienen.

### Bezugszeichenliste

- 1: Schmiermittelversorgungsvorrichtung
- 2: Aufnahmebehälter
- 3: Motor
- 4: Förderelement (Förderschnecke)
- 5: Pumpe (Radialkolbenpumpe)
- 6: Schmiermittelleitung
- 7: Welle
- 8: Fördermittel (Schneckengang)
- 9: Wellenteil
- 10: Radialkolbeneinheit
- 11: Exzenter
- 12: Ringleitung
- 13: Rückschlagventil
- 14: Überdruckventil
- 15: Wegeventil
- 16: drehfeste Verbindung
- 17: Nut
- 18: Ventil
- 19: Ventil
- 20: Umlenkplatte
- 21: Umlenkplatte
- 22: Verschlussplatte
- 23: Umlenkplatte
- 24: Verschlussplatte

## Patentansprüche

1. Schmiermittelversorgungsvorrichtung (1), die einen Aufnahmebehälter (2) für Schmiermittel aufweist, in dessen Bodenbereich sich ein von einem Motor (3) angetriebenes Förderelement (4) für Schmiermittel befindet, wobei das Förderelement (4) das Schmiermittel zu einer Pumpe (5) fördert, die das Schmiermittel unter erhöhtem Druck in eine Schmiermittelleitung (6) fördert, **dadurch gekennzeichnet, dass** das Förderelement (4) eine von dem Motor (3) angetriebene Welle (7) umfasst, um die herum sich Fördermittel (8) erstrecken, wobei das eine axiale Ende der Welle (7) mit einem Wellenteil (9) der Pumpe (5) drehfest verbunden ist, so dass der Motor (3) sowohl das Förderelement (3) als auch die Pumpe (5) antreiben kann.

2. Schmiermittel versorgungsvorrichtung nach Anspruch 1, **dadurch gekennzeichnet, dass** das Förderelement (4) als Förderschnecke ausgebildet ist, bei dem sich um die Welle (7) herum ein Fördermittel (8) in Form mindestens eines Schneckenganges erstreckt.

3. Schmiermittelversorgungsvorrichtung nach Anspruch 2, **dadurch gekennzeichnet, dass** sich die Welle (7) über die axiale Ausdehnung des mindestens einen Schneckenganges (8) hinaus erstreckt.

4. Schmiermittelversorgungsvorrichtung nach einem der Ansprüche 1 bis 3, **dadurch gekennzeichnet, dass** die Welle (7) und das Wellenteil (9) der Pumpe (5) koaxial zueinander angeordnet und über eine formschlüssige Verbindung drehfest miteinander verbunden sind.

5. Schmiermittelversorgungsvorrichtung nach Anspruch 4, **dadurch gekennzeichnet, dass** die formschlüssige Verbindung die einzige Verbindung zwischen der Welle (7) und dem Wellenteil (9) der Pumpe (5) ist.

6. Schmiermittelversorgungsvorrichtung nach einem der Ansprüche 1 bis 5, **dadurch gekennzeichnet, dass** die Pumpe (5) als Radialkolbenpumpe mit mindestens einer Radialkolbeneinheit (10) ausgebildet ist.

7. Schmiermittelversorgungsvorrichtung nach Anspruch 6, **dadurch gekennzeichnet, dass** mehrere Radialkolbeneinheiten (10) um den Umfang des Wellenteils (9) der Pumpe (5) angeordnet sind.

8. Schmiermittelversorgungsvorrichtung nach Anspruch 7, **dadurch gekennzeichnet, dass** zwischen 2 und 10 Radialkolbeneinheiten (10) um den Umfang des Wellenteils (9) der Pumpe (5) äquidistant angeordnet sind.

9. Schmiermittelversorgungsvorrichtung nach einem der Ansprüche 6 bis 8, **dadurch gekennzeichnet, dass** alle Radialkolbeneinheiten (10) von einem Exzenter (11) angetrieben werden, der drehfest mit dem Wellenteil (9) der Pumpe (5) verbunden ist.

10. Schmiermittelversorgungsvorrichtung nach einem der Ansprüche 6 bis 9, **dadurch gekennzeichnet, dass** alle Radialkolbeneinheiten (10) mit einem Federelement so vorgespannt sind, dass sie ohne äußere Krafteinwirkung eine definierte Lage einnehmen.

11. Schmiermittelversorgungsvorrichtung nach einem der Ansprüche 1 bis 10, **dadurch gekennzeichnet, dass** der Motor (3) elektrisch, hydraulisch oder pneumatisch angetrieben ist.

12. Schmiermittelversorgungsvorrichtung nach einem der Ansprüche 6 bis 11, **dadurch gekennzeichnet, dass** die Schmiermittelleitung (6) eine Ringleitung (12) umfasst, die von allen Radialkolbeneinheiten (10) mit unter Druck stehendem Schmiermittel versorgt wird.

13. Schmiermittelversorgungsvorrichtung nach Anspruch 12, **dadurch gekennzeichnet, dass** zwischen einer Radialkolbeneinheit (10) und der Ringleitung (12) ein Rückschlagventil (13) angeordnet ist.

14. Schmiermittelversorgungsvorrichtung nach einem der Ansprüche 12 oder 13, **dadurch gekennzeichnet, dass** die Ringleitung (12) mit einem Überdruckventil (14) verbunden ist.

15. Schmiermittelversorgungsvorrichtung nach einem der Ansprüche 12 bis 14, **dadurch gekennzeichnet, dass** die Ringleitung (12) mit mindestens einem Wegeventil (15) verbunden ist.
